# EUROPÄISCHE PATENTSCHRIFT

(11) **EP 3 199 707 B1**
(45) Veröffentlichungstag und Bekanntmachung des Hinweises auf die Patenterteilung: **21.11.2018**
(21) Anmeldenummer: 17154146.9
(22) Anmeldetag: 01.02.2017
(51) Int. Cl.: E02B 8/08

(54) **ANORDNUNG AN FLIESSENDEN GEWÄSSERN**
ASSEMBLY ON FLOWING WATERS
AGENCEMENT EN EAUX COURANTES

(30) Priorität: 01.02.2016 AT 500552016
(43) Veröffentlichungstag der Anmeldung: 02.08.2017
(73) Patentinhaber: Monai, Bernhard, 9063 Maria Saal (AT)
(72) Erfinder: Monai, Bernhard, 9063 Maria Saal (AT)
(74) Vertreter: Beer & Partner Patentanwälte KG

(56) Entgegenhaltungen:
- EP-A1- 2 767 635
- WO-A1-2014/172721
- US-A- 1 579 105
- US-A- 1 680 722
- US-A- 2 102 628

## Beschreibung

Die Erfindung betrifft eine Anordnung an fließenden Gewässern im Bereich eines Querbauwerks und/oder Wasserwerks, insbesondere Fischlift, zum Transportieren von Wassertieren, insbesondere Fische, mit einem im Wesentlichen vertikalen Schacht, in welchem eine Transporteinheit zwischen dem Bereich des Unterwassers, insbesondere des Unterwasserspiegels, und dem Bereich des Oberwassers, insbesondere des Oberwasserspiegels, bewegbar ist, wobei die Transporteinheit mit wenigstens einem Auftriebsmittel in Verbindung steht.

Unter Querbauwerken werden natürliche und künstlich in ein Gewässer eingebrachte, quer durch ein Gewässerbett verlaufende Strukturen verstanden, welche die natürlichen Strömungsverhältnisse und damit auch die Sohl- und Uferstruktur des Gewässers beeinflussen. Beispiele für Querbauwerke sind Sohlschwellen, Grundschwellen, Stützschwellen, Sohlrampen, Sohlstufen, Sohlgleiten, Abstürze, Stauwehre oder Talsperren. Die Höhendifferenz der Wasserspiegel zwischen Oberwasser und Unterwasser macht es Fischen unmöglich, das Hindernis, z.B. springend, zu überwinden.

Fischwanderhilfen in Form von Fischpässen, die Fischen und anderen im Wasser lebenden Tieren die Möglichkeit geben, Hindernisse, wie z.B. Stauwehre oder natürliche Sohlstufen, zu überwinden, sind bekannt. Um den Abstand der Wasserspiegel von Oberwasser zu Unterwasser stufenweise zu verringern, ist es bei Fischwanderhilfen bekannt, mehrere Becken mit unterschiedlich hohen Wasserspiegeln vorzusehen. An vielen Standorten mit Wasserkraftwerken ist die Fallhöhe für Wasser jedoch so groß, dass bei Einhaltung der aktuellen Anforderungen für die Fallhöhe von Becken zu Becken eine sehr große Zahl von Becken notwendig ist. Zusammen mit den typischen Anforderungen für die Beckengröße (z.B. Beckenlänge = dreifache Fischlänge bei einer üblichen maßgebenden Fischlänge von etwa 1m) ergeben sich sehr große Fischwanderhilfen. Deren Bau ist selbst bei freiem Baufeld so teuer, dass sich auch an bestehenden Stauanlagen Investitionen in erneuerbare Energie durch Wasserkraft oft nicht lohnen.

Eine Ausgestaltung einer Fischwanderhilfe, mit dem bei geringem Platzbedarf ein großes Gefälle überwunden werden kann, ist ein Fischlift.

Es sind Fischlifte bekannt, bei denen Fische im Bereich des Unterwassers in einer Wanne aus dem Wasser gehoben werden. Im Bereich des Oberwassers wird die Wanne gekippt, so dass das in der Wanne befindliche Wasser zusammen mit den Fischen in das Oberwasser geleitet wird. Nachteilig bei Fischliften ist, dass diese konstruktiv aufwändig gestaltet sind und viel Energie verbrauchen, zumal das volle Gewicht der mit Wasser befüllten Wanne, in der die Fische gesammelt sind, angehoben werden muss. Zudem ist das Anlocken der Fische, damit sie im Unterwasser in die Wanne schwimmen, und insbesondere das Auskippen der Wanne im Bereich des Oberwassers, für Fische nicht schonend. Nachteilig ist weiterhin, dass Fische nur dann in den Fischlift schwimmen können, wenn die Wanne im Schacht ganz unten angeordnet ist und dass Fische nur vom Unterwasser in das Oberwasser jedoch nicht vom Oberwasser in das Unterwasser transportiert werden können.

Zudem sind Fischlifte mit einem im Wesentlichen vertikalen Schacht, in welchem der Wasserstand zwischen dem Bereich des Oberwassers und dem Bereich des Unterwassers veränderbar ist, bekannt. Die Fische werden dabei meist in einem als Reuse wirkenden Korb im Schacht transportiert, wobei der Nachteil besteht, dass Fische nur in einer Richtung in den Korb hinein bzw. aus dem Korb hinaus schwimmen können. Dabei können Fische entweder nur vom Unterwasser in das Oberwasser transportiert werden oder nur vom Oberwasser in das Unterwasser.

Weiters sind Fischlifte bekannt, bei denen die Fische in einem Korb im Schacht vom Unterwasser in das Oberwasser oder vom Oberwasser in das Unterwasser transportiert werden können. Der Schacht weist öffen- und verschließbare Öffnungen im Bereich des Unter- und Oberwassers auf, durch welche die Fische in den Schacht hinein oder aus dem Schacht hinaus schwimmen können. Der Korb weist in der Korbwand ebenfalls Öffnungen auf. Nachteilig ist (wie auch bei einer Reuse), dass die Öffnungen in der Korbwand in der jeweiligen Position des Korbes im Bereich des Unter- und Oberwassers mit den Öffnungen des Schachtes korrespondieren müssen, da sonst die Fische nicht passieren können. Um dies zu gewährleisten, sind entlang des Schachtes angeordnete Führungen, z.B. Schienen, bekannt, in welchen der Korb geführt ist. Solche Führungen stellen jedoch einen technischen Aufwand dar und können Verklausungen fördern. Zudem besteht das Risiko, dass ein in Schienen geführter Korb in einer Schiene verkantet und im Schacht stecken bleibt.

WO 2014/172721 A1 offenbart eine Anordnung, die alle Merkmale des Oberbegriffs des Anspruchs 1 einschließt.

Der Erfindung liegt die Aufgabe zu Grunde, eine Anordnung der eingangs genannten Art zur Verfügung zu stellen, bei welcher störende Einflüsse beim Transport der Fische, wie z.B. Verkanten der Transporteinheit oder zumindest teilweise verschlossene Ein- oder Austrittsöffnungen, vom Unterwasser ins Oberwasser oder vom Oberwasser ins Unterwasser vermieden werden.

Gelöst wird diese Aufgabe erfindungsgemäß mit einer Anordnung, welche die Merkmale des Anspruchs 1 aufweist.

Bevorzugte und vorteilhafte Ausführungsformen der Erfindung sind Gegenstand der Unteransprüche.

Erfindungsgemäß ist vorgesehen, dass die Transporteinheit führungsfrei im Schacht bewegbar ist und dass die Transporteinheit wandfrei, insbesondere als Scheibe, ausgeführt ist. Dadurch, dass die Transporteinheit seitlich keine Wände aufweist, gibt es kein Risiko, dass die Öffnungen im Schacht durch eine solche Wand zumindest teilweise verschlossen werden können. Die Fische können also immer ungehindert in den Schacht hinein bzw. aus dem Schacht heraus schwimmen, wenn die entsprechende Öffnung im Schacht geöffnet ist. Somit ist auch die Anordnung der Öffnungen des Schachtes frei wählbar, d.h. die Fische können in den Schacht hinein schwimmen oder aus dem Schacht hinausschwimmen, überall dort wo eine Öffnung im Schacht angeordnet ist. Weiters ist das Risiko, dass die Transporteinheit sich mit einem Bauteil verkantet, ausgeschlossen, da die Transporteinheit im Schacht ohne Führungseinrichtung frei bewegbar ist.

Mit der erfindungsgemäßen Anordnung wird erreicht, dass Fische ohne störende Einflüsse vom Unterwasser ins Oberwasser oder vom Oberwasser ins Unterwasser transportiert werden können.

In einer besonders bevorzugten Ausführungsform weist der Schacht einen im Wesentlichen kreisrunden Querschnitt auf, wodurch das Risiko, dass sich die Transporteinheit aufgrund ihrer Form im Schacht verkantet, praktisch ausgeschlossen ist. Andere Ausführungsformen, in denen der Schacht einen anders geformten, beispielsweise rechteckigen, Querschnitt aufweist, sind jedoch ebenfalls denkbar.

Weiters ist die Transporteinheit bevorzugt um eine Mittelachse des Schachtes drehbar im Schacht angeordnet.

Die Größe und Form der Transporteinheit ist vorzugsweise an die Größe und Form der durch die Innenwandung des Schachtes gebildeten Querschnittsfläche angepasst, in der Art, dass der Außenumfang der Transporteinheit im Wesentlichen dem Innenumfang des Schachtes entspricht. Dadurch wird den zu transportierenden Wassertieren die Möglichkeit verwehrt, an der Transporteinheit vorbei zu schwimmen.

In einer bevorzugten Ausführungsform besteht die Transporteinheit im Wesentlichen aus einer wasserdurchlässigen Scheibe, insbesondere aus einem scheibenförmigen Lochblech, wobei ein handelsübliches, an die gewünschte Form angepasstes Niro-Lochblech verwendet werden kann. Die Transporteinheit kann beispielsweise schlitzförmige Löcher aufweisen.

Bevorzugter Weise liegt die Transporteinheit in Einbauposition in einer im Wesentlichen waagerechten Ebene, insbesondere so, dass diese Ebene quer, im Wesentlichen orthogonal, zu der Mittelachse des Schachtes angeordnet ist. Durch diese Ausführungsform ist die Transporteinheit besonders günstig entlang der Mittelachse des Schachtes auf und ab bewegbar. Ausführungsformen, bei denen die Mittelachse des Schachtes geneigt ist, und/oder bei denen die Transporteinheit in einer Ebene liegt, die nicht orthogonal zur Mittelachse angeordnet ist, sind ebenfalls denkbar.

In einer bevorzugten Ausführungsform sind Mittel zum Anheben und Absenken des Wasserspiegels im Schacht zwischen dem Bereich des Unterwassers, insbesondere des Unterwasserspiegels, und dem Bereich des Oberwassers, insbesondere des Oberwasserspiegels, vorgesehen. Dazu können jegliche Formen von Ein- oder Ausläufen in den Schacht, beispielsweise als Rohrsysteme ausgestaltet, dienen, die manuell oder aber auch automatisch gesteuert bzw. bedient werden können.

Besonders bevorzugt ist, dass die dem Unterwasser zugeordnete Wand des Schachtes eine erste Öffnung sowie Mittel zum Öffnen und Verschließen dieser Öffnung, insbesondere einen ersten Schieber, aufweist, und dass die dem Oberwasser zugeordnete Wand des Schachtes eine zweite Öffnung und Mittel zum Öffnen und Verschließen dieser Öffnung, insbesondere einen zweiten Schieber, aufweist.

Eine besonders bevorzugte Ausführungsform der Anordnung ist mit einer zusätzlichen Vorrichtung zum Bewegen der Transporteinheit entlang des Schachtes, insbesondere einer Zug- oder Druckvorrichtung, verbunden. Somit kann das System auch bei schwankenden Oberwasserspiegeln störungsfrei funktionieren, da die Transporteinheit auf der gewünschten Höhe stehen bzw. hängen bleiben kann.

Durch die Kombination mit einer wasserdurchlässigen Scheibe, insbesondere einem Lochblech, kann zum Auf- und Abbewegen der Transporteinheit eine Seilwinde mit relativ niedriger Nennleistung verwendet werden. Das bietet einen großen Vorteil gegenüber bekannten Fischliften mit Seilwinden, die im Gegensatz dazu eine Transporteinheit besitzen, in der nicht nur Fische, sondern auch das Wasser, in dem sich die Fische befinden, in einem dementsprechend dimensionierten Transportkorb transportiert werden muss. Dies hatte zur Folge, dass sehr leistungsfähige Seilwinden eingesetzt werden müssen, die in der Lage sind, das kombinierte Gewicht von Wassertieren, Wasser und Transportkorb auf und ab zu bewegen.

Bevorzugterweise weist die Vorrichtung zum Bewegen der Transporteinheit entlang des Schachtes ein an der Transporteinheit angeordnetes Seil, insbesondere ein Stahlseil, und eine damit verbundene Seilwinde auf.

In einer bevorzugten Ausführungsform sind an der Transporteinheit zwei oder mehrere Ketten oder Seile, insbesondere Stahlseile, radialsymmetrisch angeordnet, welche wiederum mit dem Seil der Vorrichtung zum Bewegen der Transporteinheit, beispielsweise mittels eines Metallhakens, verbunden sind. Die Seilwinde der Vorrichtung zum Bewegen der Transporteinrichtung kann in so einer Ausführungsform an einer Tragvorrichtung, beispielsweise einem Stahlträger, im oberen Bereich des Schachts, insbesondere mittig über dem Schacht, angeordnet sein.

In einer weiteren bevorzugten Ausführungsform sind Messmittel, insbesondere Sensoren, vorgesehen, um Zustandsdaten des Gewässers, insbesondere den Wasserstand des Unterwassers und/oder des Oberwassers und/oder den Wasserstand im Schacht, zu erfassen. Auch andere geeignete Messmittel, außer Sensoren, können dafür herangezogen werden.

Als besonders günstig ist eine Ausführungsform anzusehen, bei der Mittel zum Anheben und Absenken des Wasserspiegels im Schacht und/oder die Vorrichtung zum Bewegen der Transporteinheit entlang des Schachtes und/oder Mittel zum Öffnen und Verschließen der ersten und/oder zweiten Öffnung durch die Mittel zum Erfassen der Zustandsdaten des fließenden Gewässers automatisch steuerbar sind.

Im Rahmen der Erfindung kann das Auftriebsmittel wenigstens ein Schwimmer, beispielsweise ein Hohlkörper, vorzugsweise ein aufblasbarer Schwimmer sein. Bei einem aufblasbaren Schwimmer kann vorgesehen sein, dass dieser steuerbar durch einen Kompressor mit Luft befüllt und dass die Luft steuerbar aus dem Schwimmer herausgelassen werden kann.

Das wenigstens eine Auftriebsmittel kann im Schacht oberhalb oder unterhalb der Transporteinheit angeordnet sein. Es kann auch unterhalb und oberhalb der Transporteinheit wenigstens ein Auftriebsmittel vorgesehen sein. Vorzugsweise ist das Auftriebsmittel ringförmig.

In einer bevorzugten Ausführungsform ist vorgesehen, dass im Schacht oberhalb der Transporteinheit ein Anschlagmittel für die Transporteinheit angeordnet ist, wobei das Anschlagmittel vorzugsweise im Bereich der zweiten Öffnung der dem Oberwasser zugeordneten Wand des Schachtes vorgesehen ist. Das Anschlagmittel kann aus wenigstens einem in den Schacht ragenden Vorsprung bestehen. Das Anschlagmittel bildet ein Stoppersystem für die Transporteinheit, die eine Bewegung der Transporteinheit nach oben begrenzt. Somit ist gewährleistet, dass sich die Transporteinheit auch bei weiter ansteigendem Wasserspiegel im Schacht nicht über die zweite Öffnung des Schachts hinaus bewegt, sondern im Bereich der zweiten Öffnung für ein störungsfreies Herein- bzw. Herausschwimmen von Wassertieren immer korrekt positioniert ist.

Im Rahmen der Erfindung kann eine Haltevorrichtung für die Transporteinrichtung vorgesehen sein, so dass die Transporteinheit in der gewünschten Position gehalten werden kann. Beispielsweise kann die Transporteinheit auch bei abfallendem Wasserspiegel im Schacht im Bereich der zweiten Öffnung gehalten werden. Die Haltevorrichtung kann ansteuerbare Magnete umfassen, die mit der Transporteinheit oder mit einem am Auftriebsmittel angeordneten Metallteil zusammenwirken.

Weitere Einzelheiten, Merkmale und Vorteile der Erfindung ergeben sich aus der nachstehenden Beschreibung unter Bezugnahme auf die angeschlossenen Zeichnungen, in welchen bevorzugte Ausführungsformen dargestellt sind. Es zeigt:
- Fig. 1: eine Schnittansicht einer ersten Ausführungsform eines erfindungsgemäßen Fischlifts und
- Fig. 2: eine Schnittansicht einer zweiten Ausführungsform eines erfindungsgemäßen Fischlifts.

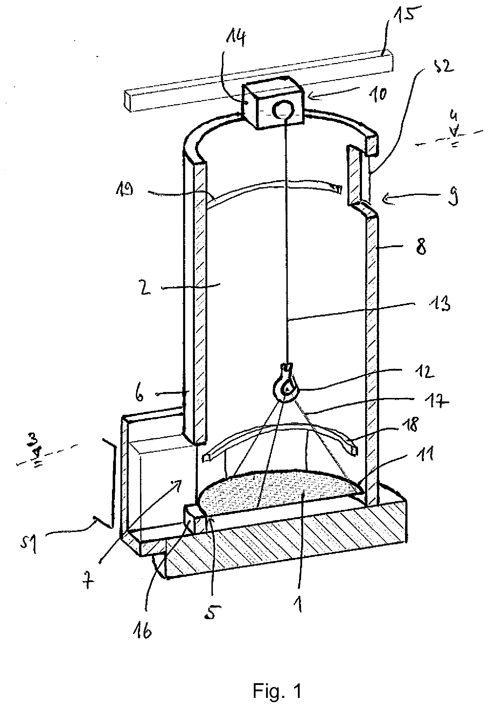

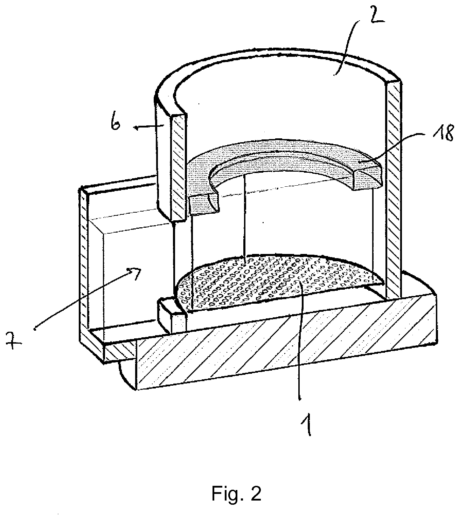

Fig. 1 und 2 zeigen einen erfindungsgemäßen Fischlift, bei dem Wassertiere mittels einer wasserdurchlässigen Transporteinheit 1 in einem vertikalen Schacht 2 zwischen dem Bereich des Unterwassers 3 und dem Bereich des Oberwassers 4 befördert werden.

Die Transporteinheit 1 ist in diesen Ausführungsformen ein kreisrundes Lochblech, dessen Außendurchmesser annähernd so groß ist, wie der Innendurchmesser des ebenfalls kreisrunden Schachts 2, so dass zwischen Transporteinheit 1 und Schacht 2 nur ein möglichst schmaler Spalt 5 entstehen kann. Wird die Transporteinheit 1 entlang des Schachtes 2 bewegt, kann Wasser durch die Löcher der Transporteinheit 1 hindurch und vorbei an der Transporteinheit 1 durch den Spalt 5 strömen, wobei die Größe der Löcher und die Breite des Spalts 5 das ungewollte Passieren von Wassertieren ab einer gewissen Größe verhindern.

Eine dem Unterwasser 3 zugeordnete Wand 6 des Schachtes 2 weist im Bereich der Unterwassersohle eine Einstiegsöffnung 7 in den Schacht 2 sowie ein angedeutetes Mittel S1, beispielsweise einen Absperrschieber, zum Öffnen und Verschließen der Einstiegsöffnung 7 auf. Eine dem Oberwasser 4 zugeordnete Wand 8 des Schachtes 2 weist im Bereich des Oberwasserspiegels eine Austrittsöffnung 9 aus dem Schacht 2 und ein angedeutetes Mittel S2, beispielsweise einen Absperrschieber, zum Öffnen und Verschließen der Austrittsöffnung 9 auf.

Um die Transporteinheit 1 entlang des Schachtes 2 abhängig vom Wasserspiegel im Schacht 2 bewegen zu können, ist oberhalb der Transporteinheit 1 ein Auftriebsmittel 18 in Form eines ringförmigen, aufblasbaren Schwimmers vorgesehen. Im Rahmen der Erfindung ist das Auftriebsmittel 18 bevorzugt in einem gewissen Abstand oberhalb der Transporteinheit 1 angeordnet, so dass das Auftriebsmittel 18 in der Fangphase im Bereich des Unterwassers 3 oberhalb des Wasserspiegels im Schacht 2 angeordnet ist.

Um die Transporteinheit 1 entlang des Schachtes 2 unabhängig von Wasserspiegeln bewegen zu können, ist eine Vorrichtung 10 vorgesehen. Dabei sind an der Transporteinheit 1 mehrere Seile 17 entlang des Randes 11 angebracht, die wiederum über einen Haken 12 mit einem langen Seil 13 verbunden sind. Das lange Seil 13 ist mit einer Seilwinde 14 verbunden, über die es auf- oder abgewickelt werden kann, und die in der dargestellten Ausführungsform an einem Balkenträger 15 mittig über dem Schacht 2 angeordnet ist. Durch das Aufwickeln des langen Seiles 13 wird die Transporteinheit 1 den Schacht 2 entlang nach oben bewegt. Das Abwickeln des Seiles 13 bewirkt ein Absinken der Transporteinheit 1 entlang des Schachtes 2 aufgrund ihres Eigengewichtes.

Es sind keine Führungsschienen notwendig, wodurch sich die als Scheibe ausgeführte Transporteinheit 1 beliebig um die Mittelachse des Schachtes 2 verdrehen kann und wobei die Transporteinheit 1 im Wesentlichen parallel zu den Wasserspiegeln des Unter- 3 und Oberwassers 4, also waagrecht, bleibt. Die kreisrunde Form der Transporteinheit 1 und der schmale Spalt 5 zwischen dem Rand 11 der Transporteinheit 1 und dem Schacht 2 unterstützen den Effekt, dass sich die Transporteinheit 1 beim Absinken im Schacht 2 nicht verkantet und im Schacht 2 nicht stecken bleibt.

Durch das Öffnen und Verschließen der Öffnungen 7, 9 und durch nicht näher dargestellte Mittel zum Anheben und Absenken des Wasserspiegels im Schacht 2, beispielsweise in Form von Rohrleitungssystemen, kann der Wasserspiegel im Schacht 2 kontrolliert gehoben oder gesenkt werden. So steigt der Wasserspiegel im Schacht 2 beispielsweise auf das Niveau des Oberwasserspiegels 4 an, wenn die Öffnung 7 geschlossen und die Öffnung 9 geöffnet ist, oder sinkt auf das Niveau des Unterwasserspiegels 3 ab, wenn die Öffnung 7 geöffnet und die Öffnung 9 geschlossen ist.

Die Mittel S1, S2 zum Öffnen und Verschließen der Öffnungen 7, 9 und die Vorrichtung 10 zum Bewegen der Transporteinheit 1 entlang des Schachtes 2 werden in der gezeigten Ausführungsform automatisch angesteuert, je nach Voreinstellung und nach Umweltdaten, wie beispielsweise Wasserständen oder Strömungsgeschwindigkeiten, die durch nicht dargestellte Sensoren ermittelt werden.

Um zu verhindern, dass die Transporteinheit 1 durch das Auftriebsmittel 18 bei steigendem Wasserspiegel im Schacht 2 über den unteren Rand der zweiten Öffnung 9 ansteigt, sind Anschlagmittel 19 im Bereich des unteren Randes der zweiten Öffnung 9 vorgesehen.

Der Betrieb einer erfindungsgemäßen Anordnung als Fischlift wird beispielhaft für den Transport von Wassertieren vom Unterwasser 3 ins Oberwasser 4 dargestellt:
In der Fangphase befindet sich die Transporteinheit 1 im Schacht 2 unterhalb des Niveaus des Wasserspiegels des Unterwassers 3. In der gezeigten Position fluchtet die scheibenförmige Transporteinheit 1 mit einer kleinen Rampe 16 im Bereich der Sohle des Unterwassers 3, so dass Wassertiere nicht unter die Transporteinheit 1 gelangen können. Der Wasserspiegel im Schacht 2 entspricht dem Wasserspiegel des Unterwassers 3, wobei die Öffnung 7 ganz geöffnet und die Öffnung 9 im Oberwasser 4 nur zu einem kleinen Teil geöffnet ist. Das durch die Austrittsöffnung 9 in den Schacht 2 fließende und aus dem Schacht 2 durch die Einstiegsöffnung 7 in das Unterwasser 3 strömende Wasser erzeugt eine Lockströmung, durch die Wassertiere in das Innere des Schachtes 2 gelockt werden. Da die Transporteinheit 1 nicht als Korb, sondern als flache Scheibe, also ohne Seitenrand, ausgeführt ist, kann die Transporteinheit 1 beliebig um die Mittelachse des Schachtes 2 verdreht sein, ohne dadurch zu verhindern, dass Wassertiere vom Unterwasser 3 durch die Einstiegsöffnung 7 in den Schacht 2 hinein gelangen können.

Nach einer Fangzeit von beispielsweise 20 min wird die Einstiegsöffnung 7 im Unterwasser 3 geschlossen. Über nicht dargestellte Mittel zum Anheben des Wasserspiegels im Schacht 2 und/oder durch das Öffnen der Austrittsöffnung 9 wird der Wasserspiegel im Schacht 2 auf das Niveau des Wasserspiegels im Oberwasser 4 angehoben. Die Transporteinheit 1 wird durch das Auftriebsmittel 18 und/oder durch Aufwickeln des Seils 13 den Schacht 2 entlang nach oben, in Richtung Oberwasser 4, bewegt. Die im Schacht 2 befindlichen Wassertiere werden durch die Transporteinheit 1 vom Bereich des Unterwassers 3 in den Bereich des Oberwassers 4 angehoben, wobei sie im Bereich des Oberwassers 4 den Schacht 2 durch die bereits geöffnete oder noch zu öffnende Öffnung 9 in das Oberwasser 4 verlassen können.

Nach erfolgtem Ausstieg der Wassertiere, oder nach einer bestimmten Zeitspanne, wird die Öffnung 9 durch einen Schieber S2 geschlossen, wodurch der Wasserzufluss in den Schacht 2 unterbunden ist. Die Einstiegsöffnung 7 wird geöffnet und der Wasserspiegel im Schacht 2 sinkt wieder auf das Niveau des Wasserspiegels des Unterwassers 3 ab. Gleichzeitig oder davor, wird das Seil 13 (soweit vorhanden) abgewickelt, woraufhin die Transporteinheit 1 den Schacht 2 entlang nach unten, in Richtung Unterwasser 3, absinkt. Die Öffnung 9 im Bereich des Oberwassers 4 wird wieder zum Teil geöffnet, so dass Wasser aus dem Oberwasser 4 in den Schacht 2 strömen kann und im Bereich des Unterwassers 3 eine Lock- bzw. Leitströmung erzeugt.

Die Transporteinheit 1 ist rund, beispielsweise mit einem Durchmesser von ca. 2,50 m, ausgeführt, so dass die größenbestimmende Fischart Äsche mit einer Länge von ca. 50 cm den Fischlift ohne Probleme nutzen kann.

Zum Kontrollieren von Wassertieren wird die Öffnung 9 im Bereich des Oberwassers 4 geschlossen, wenn sich die Transporteinheit 1 im Bereich des Oberwassers 4 befindet. Die Transporteinheit 1 kann von der Seilwinde 14 soweit entlang des Schachtes 2 angehoben werden, dass die Wassertiere mit Käschern gefangen werden können. Zur Wartung kann die Transporteinheit 1 auch ganz aus dem Wasser beziehungsweise aus dem Schacht 2 gezogen werden.

Eine Ausführungsform der Erfindung kann wie folgt zusammengefasst werden:
Eine Anordnung an fließenden Gewässern im Bereich eines Querbauwerks und/oder Wasserwerks, insbesondere ein Fischlift, zum Transportieren von Wassertieren, insbesondere von Fischen, weist einen im Wesentlichen vertikalen Schacht 2 auf, in dem eine Transporteinheit 1 zwischen dem Bereich des Unterwassers 3, insbesondere des Unterwasserspiegels, und dem Bereich des Oberwassers 4, insbesondere des Oberwasserspiegels, bewegbar ist. Die Transporteinheit 1 steht mit wenigstens einem Auftriebsmittel 18 in Verbindung. Die Transporteinheit 1 ist führungsfrei im Schacht 2 bewegbar und ist wandfrei, insbesondere als Scheibe, ausgeführt.

## Patentansprüche

1. Anordnung an fließenden Gewässern im Bereich eines Querbauwerks und/oder Wasserwerks, insbesondere Fischlift, zum Transportieren von Wassertieren, insbesondere Fische, mit einem im Wesentlichen vertikalen Schacht (2), in welchem eine Transporteinheit (1) zwischen dem Bereich des Unterwassers (3), insbesondere des Unterwasserspiegels, und dem Bereich des Oberwassers (4), insbesondere des Oberwasserspiegels, bewegbar ist, wobei die Transporteinheit (1) mit wenigstens einem Auftriebsmittel (18) in Verbindung steht, wobei die Transporteinheit (1) führungsfrei im Schacht (2) bewegbar ist, **dadurch gekennzeichnet, dass** die Transporteinheit (1) wandfrei, insbesondere als Scheibe, ausgeführt ist.

2. Anordnung nach Anspruch 1, **dadurch gekennzeichnet, dass** der Schacht (2) einen im Wesentlichen kreisrunden Querschnitt aufweist.

3. Anordnung nach Anspruch 1 oder 2, **dadurch gekennzeichnet, dass** die Transporteinheit (1) um eine Mittelachse des Schachtes (2) drehbar im Schacht (2) angeordnet ist.

4. Anordnung nach einem der Ansprüche 1 bis 3, **dadurch gekennzeichnet, dass** Größe und Form der Transporteinheit (1) an die Form und die Größe der durch die Innenwandung des Schachtes gebildete Querschnittsfläche angepasst ist.

5. Anordnung nach einem der Ansprüche 1 bis 4, **dadurch gekennzeichnet, dass** die Transporteinheit (1) im Wesentlichen aus einer wasserdurchlässigen Scheibe, insbesondere einem Lochblech, besteht.

6. Anordnung nach einem der Ansprüche 1 bis 5, **dadurch gekennzeichnet, dass** die Transporteinheit (1) in Einbauposition in einer im Wesentlichen waagerechten Ebene liegt, insbesondere, dass die Transporteinheit (1) in einer Ebene liegt, die quer, im Wesentlichen orthogonal, zu der Mittelachse des Schachtes (2) angeordnet ist.

7. Anordnung nach einem der Ansprüche 1 bis 6, **dadurch gekennzeichnet, dass** Mittel zum Anheben und Absenken des Wasserspiegels im Schacht (2) zwischen dem Bereich des Unterwassers (3), insbesondere des Unterwasserspiegels, und dem Bereich des Oberwassers (4), insbesondere des Oberwasserspiegels, vorgesehen sind.

8. Anordnung nach einem der Ansprüche 1 bis 7, **dadurch gekennzeichnet, dass** die dem Unterwasser (3) zugeordnete Wand (6) des Schachtes (2) eine erste Öffnung (7) sowie Mittel zum Öffnen und Verschließen dieser Öffnung (7), insbesondere einen ersten Schieber, aufweist und dass die dem Oberwasser (4) zugeordnete Wand (8) des Schachtes (2) eine zweite Öffnung (9) und Mittel zum Öffnen und Verschließen dieser zweiten Öffnung (9), insbesondere einen zweiten Schieber, aufweist.

9. Anordnung nach einem der Ansprüche 1 bis 8, **dadurch gekennzeichnet, dass** sie mit einer Vorrichtung (10) zum Bewegen der Transporteinheit (1) entlang des Schachtes (2), insbesondere einer Zug- oder Druckvorrichtung, verbunden ist.

10. Anordnung nach Anspruch 9, **dadurch gekennzeichnet, dass** die Vorrichtung (10) zum Bewegen der Transporteinheit (1) entlang des Schachtes (2) ein oder mehrere an der Transporteinheit (1) angeordnete Seile (13, 17), insbesondere Stahlseile, und eine damit verbundene Seilwinde (14) aufweist.

11. Anordnung nach einem der Ansprüche 1 bis 10, **dadurch gekennzeichnet, dass** Messmittel, insbesondere Sensoren, vorgesehen sind, um Zustandsdaten des Gewässers, insbesondere den Wasserstand des Unterwassers (3) und/oder des Oberwassers (4) und/oder den Wasserstand im Schacht (2), zu erfassen.

12. Anordnung nach Anspruch 11, **dadurch gekennzeichnet, dass** Mittel zum Anheben und Absenken des Wasserspiegels im Schacht (2) und/oder die Vorrichtung (10) zum Bewegen der Transporteinheit (1) entlang des Schachtes (2) und/oder das Mittel zum Öffnen und Verschließen der ersten und/oder zweiten Öffnung (7, 9) durch die Mittel zum Erfassen der Zustandsdaten des fließenden Gewässers automatisch steuerbar sind.

13. Anordnung nach einem der Ansprüche 1 bis 12, **dadurch gekennzeichnet, dass** das Auftriebsmittel (18) ein Schwimmer, vorzugsweise ein aufblasbarer Schwimmer, ist.

14. Anordnung nach Anspruch 13, **dadurch gekennzeichnet, dass** im Schacht (2) oberhalb der Transporteinheit (1) ein Anschlagmittel (19) für die Transporteinheit (1) angeordnet ist, wobei das Anschlagmittel (19) vorzugsweise im Bereich der zweiten Öffnung (9) der dem Oberwasser (4) zugeordneten Wand (8) des Schachtes (2) vorgesehen ist.

15. Anordnung nach einem der Ansprüche 1 bis 14, **dadurch gekennzeichnet, dass** sie eine Haltevorrichtung für die Transporteinrichtung (1) umfasst, wobei die Haltevorrichtung vorzugsweise ansteuerbare Magnete umfasst, die mit der Transporteinheit (1) oder mit einem am Auftriebsmittel (18) angeordneten Metallteil zusammenwirken.

## Claims

1. Assembly at flowing water in the region of a transverse structure and/or waterworks, in particular a fish lift, for transporting aquatic animals, in particular fish, comprising a substantially vertical shaft (2), in which a transport unit (1) is movable between the area of the tailwater (3), in particular the tailwater level, and the area of the headwater (4), in particular the headwater level, wherein the transport unit (1) is connected to at least one buoyancy means (18), wherein the transport unit (1) is movable in the shaft (2) free of guides, **characterized in that** that the transport unit (1) is designed free of walls, in particular as a disc.

2. Assembly according to claim 1, **characterized in that** the shaft (2) has a substantially circular cross-section.

3. Assembly according to claim 1 or 2, **characterized in that** the transport unit (1) is arranged in the shaft (2) rotatable a central axis of the shaft (2).

4. Assembly according to one of claims 1 to 3, **characterized in that** the size and shape of the transport unit (1) is matched to the shape and size of the cross-sectional area formed by the inner wall of the shaft.

5. Assembly according to one of claims 1 to 4, **characterized in that** the transport unit (1) substantially consists of a water-permeable disc, in particular a perforated plate.

6. Assembly according to one of claims 1 to 5, **characterized in that** the transport unit (1) in the installed position lies in a substantially horizontal plane, in particular **in that** the transport unit (1) lies in a plane that is arranged transversely, substantially orthogonally, to the central axis of the shaft (2).

7. Assembly according to one of claims 1 to 6, **characterized in that** means are provided for raising and lowering the water level in the shaft (2) between the area of the tailwater (3), in particular the tailwater level, and the area of the headwater (4), in particular the headwater level.

8. Assembly according to one of claims 1 to 7, **characterized in that** the wall (6) of the shaft (2) assigned to the tailwater (3) has a first opening (7) and means for opening and closing said opening (7), in particular a first slider, and **in that** the wall (8) of the shaft (2) assigned to the headwater (4) has a second opening (9) and means for opening and closing said second opening (9), in particular a second slider.

9. Assembly according to one of claims 1 to 8, **characterized in that** it is connected to a device (10) for moving the transport unit (1) along the shaft (2), in particular a pulling or pushing device.

10. Assembly according to claim 9, **characterized in that** the device (10) for moving the transport unit (1) along the shaft (2) comprises one or more cables (13, 17), in particular steel cables, which are arranged on the transport unit (1), and a cable winch (14) which is connected to said cables.

11. Assembly according to one of claims 1 to 10, **characterized in that** measuring means, in particular sensors, are provided for detecting state data of the water, in particular the water level of the tailwater (3) and/or of the headwater (4) and/or the water level in the shaft (2).

12. Assembly according to claim 11, **characterized in that** means for raising and lowering the water level in the shaft (2) and/or the device (10) for moving the transport unit (1) along the shaft (2) and/or the means for opening and closing the first and/or second opening (7, 9) can be automatically controlled by the means for detecting the state data of the flowing water.

13. Assembly according to one of claims 1 to 12, **characterized in that** the buoyancy means (18) is a float, preferably an inflatable float.

14. Assembly according to claim 13, **characterized in that** a stop means (19) for the transport unit (1) is arranged in the shaft (2) above the transport unit (1), wherein the stop means (19) is preferably provided in the region of the second opening (9) of the wall (8) of the shaft (2) assigned to the headwater (4).

15. Assembly according to one of claims 1 to 14, **characterized in that** it comprises a holding device for the transport device (1), wherein the holding device preferably comprises actuatable magnets which cooperate with the transport unit (1) or with a metal part arranged on the buoyancy means (18) .

## Revendications

1. Installation sur des eaux courantes au niveau d'un éperon et/ou d'un ouvrage hydraulique, en particulier ascenseur à poissons, pour le transport d'animaux aquatiques, en particulier de poissons, avec une gaine (2) sensiblement verticale dans laquelle une unité de transport (1) peut être déplacée entre la zone du bief d'aval (3), en particulier le niveau du bief d'aval, et la zone du bief d'amont (4), en particulier le niveau du bief d'amont, laquelle unité de transport (1) est en liaison avec au moins un moyen de flottaison (18), dans laquelle l'unité de transport (1) peut se déplacer libre de guidage dans la gaine (2), **caractérisée en ce que** l'unité de transport (1) est réalisée libre de parois, en particulier sous la forme d'un disque.

2. Installation selon la revendication 1, **caractérisée en ce que** la gaine (2) présente une section sensiblement circulaire.

3. Installation selon la revendication 1 ou 2, **caractérisée en ce que** l'unité de transport (1) est disposée dans la gaine (2) de façon à pouvoir tourner autour d'un axe médian de la gaine (2).

4. Installation selon l'une des revendications 1 à 3, **caractérisée en ce que** la taille et la forme de l'unité de transport (1) sont adaptées à la forme et à la taille de l'aire de section formée par la paroi intérieure de la gaine.

5. Installation selon l'une des revendications 1 à 4, **caractérisée en ce que** l'unité de transport (1) se compose pour l'essentiel d'un disque perméable à l'eau, en particulier d'une tôle perforée.

6. Installation selon l'une des revendications 1 à 5, **caractérisée en ce que** l'unité de transport (1) se trouve, dans la position de montage, dans un plan sensiblement horizontal, en particulier **en ce que** l'unité de transport (1) se trouve dans un plan transversal, sensiblement perpendiculaire, par rapport à l'axe médian de la gaine (2).

7. Installation selon l'une des revendications 1 à 6, **caractérisée en ce que** des moyens sont prévus pour élever et abaisser le niveau d'eau dans la gaine (2) entre la zone du bief d'aval (3), en particulier le niveau du bief d'aval, et la zone du bief d'amont (4), en particulier le niveau du bief d'amont.

8. Installation selon l'une des revendications 1 à 7, **caractérisée en ce que** la paroi (6) de la gaine (2) associée au bief d'aval (3) présente une première ouverture (7) ainsi que des moyens pour ouvrir et fermer cette ouverture (7), en particulier une première vanne, et **en ce que** la paroi (8) de la gaine (2) associée au bief d'amont (4) présente une deuxième ouverture (9) et des moyens pour ouvrir et fermer cette deuxième ouverture (9), en particulier une deuxième vanne.

9. Installation selon l'une des revendications 1 à 8, **caractérisée en ce qu'**elle est reliée à un dispositif (10) pour déplacer l'unité de transport (1) le long de la gaine (2), en particulier un dispositif de traction et de poussée.

10. Installation selon la revendication 9, **caractérisée en ce que** le dispositif (10) pour déplacer l'unité de transport (1) le long de la gaine (2) présente un ou plusieurs câbles (13, 17) disposés sur l'unité de transport (1), en particulier des câbles en acier, et un treuil à câble (14) relié à ceux-ci.

11. Installation selon l'une des revendications 1 à 10, **caractérisée en ce que** des moyens de mesure, en particulier des capteurs, sont prévus pour acquérir des données sur l'état de l'eau, en particulier le niveau d'eau du bief d'aval (3) et/ou du bief d'amont (4) et/ou le niveau d'eau dans la gaine (2).

12. Installation selon la revendication 11, **caractérisée en ce que** des moyens pour élever et abaisser le niveau d'eau dans la gaine (2) et/ou le dispositif (10) pour déplacer l'unité de transport (1) le long de la gaine (2) et/ou le moyen pour ouvrir et fermer la première et/ou la deuxième ouverture (7, 9) peuvent être commandés automatiquement par les moyens d'acquisition des données d'état de l'eau courante.

13. Installation selon l'une des revendications 1 à 12, **caractérisée en ce que** le moyen de flottaison (18) est un flotteur, en particulier un flotteur gonflable.

14. Installation selon la revendication 13, **caractérisée en ce qu'**est disposé dans la gaine (2) au-dessus de l'unité de transport (1) un moyen formant butée (19) pour l'unité de transport (1), lequel moyen formant butée (19) est de préférence prévu au niveau de la deuxième ouverture (9) de la paroi (8) de la gaine (2) associée au bief d'amont (4).

15. Installation selon l'une des revendications 1 à 14, **caractérisée en ce qu'**elle comprend un dispositif de maintien pour l'unité de transport (1), lequel dispositif de maintien comprend de préférence des aimants pouvant être commandés qui coopèrent avec l'unité de transport (1) ou avec une pièce métallique disposée sur le moyen de flottaison (18).
